(19) Europäisches Patentamt
European Patent Office
Office européen des brevets

(11) EP 4 815 254 A1

(12) EUROPEAN PATENT APPLICATION

(43) Date of publication:
**30.09.2026 Bulletin 2026/40**

(21) Application number: **25225063.4**

(22) Date of filing: **18.12.2025**

(51) International Patent Classification (IPC):
***H02J 7/92** (2026.01)*

(52) Cooperative Patent Classification (CPC):
**H02J 7/92;** H02J 7/50; H02J 7/60; H02J 7/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.03.2025 US 202563777034 P**
**19.09.2025 US 202519333485**

(71) Applicant: **Lite-On Singapore Pte. Ltd.**
**Singapore 556741 (SG)**

(72) Inventors:
- **AHMAD JEFRI, Hamimah Binte**
  **Lorong Chuan, Singapore (SG)**
- **NG, Jen Ruey**
  **Lorong Chuan, Singapore (SG)**
- **LAU, En Cheng Benjin**
  **Lorong Chuan, Singapore (SG)**
- **KOW, Ken Weng**
  **Lorong Chuan, Singapore (SG)**

(74) Representative: **Patentship Patentanwaltsgesellschaft mbH**
**Paul-Gerhardt-Allee 50**
**81245 München (DE)**

# (54) CHARGER MANAGEMENT DEVICE AND METHOD FOR CHARGER MANAGEMENT

(57) A charger management device (130) including interfaces, a memory (134), and a processor (132) is provided. The interfaces obtain main and import current measurements associated with a main breaker (MB) and chargers (104a~140n). The processor (132) is configured to: generate a default charging profile based on a maximum charging capacity of the chargers (104a~140n) until the main current measurement (MC) exceeds an upper threshold, wherein the default charging profile defines a charging current to be imported by the chargers (104a~140n). The processor (132) is further configured to calculate an available current associated with the chargers (104a~140n) based on the upper threshold of a main current flowing through the main breaker (MB). The processor (132) is further configured to generate a modulated charging profile based on the available current in response to the main current measurement (MC) exceeding the upper threshold. The processor (132) is further configured to submit the modulated charging profile to the chargers (104a~140n) to suppress the main current.

100
MB
Im
MS
112
DPM
MC
114
Ic
Ib
130
132
Processor
134
Memory
120
Buildings
MC
MCP
140
EVSE
150a
140a
Ica
EVSE
150b
140b
Icb
EVSE
150n
140n
Icn

FIG. 1



Processed by Luminess, 75001 PARIS (FR)

## Description

### TECHNICAL FIELD OF THE INVENTION

The present invention relates to energy management and distribution, and, in particular, to dynamic load management and redistribution for electric vehicle supply equipment (EVSE).

### BACKGROUND OF THE INVENTION

In conventional load management and distribution for power grids, the total load may include residual load and charging capacity. To ensure that the total load does not exceed a maximum grid capacity of the power grids, the charging capacity is typically limited to a predetermined value. By applying this limitation, the total load will not exceed the maximum grid capacity even when the residual load reaches its maximum value. However, the limitation on the charging capacity also limits the power available for charging, leaving a considerable amount of unused power when the residual load is relatively low.

### BRIEF SUMMARY OF THE INVENTION

An embodiment of the present invention provides a charger management device, comprising one or more interfaces, a memory, and a processor. The interfaces obtain a main current measurement associated with a main breaker and import current measurement associated with a plurality of chargers.

The processor is configured to generate a default charging profile based on a maximum charging capacity of the chargers until the main current measurement exceeds an upper threshold, wherein the default charging profile defines a charging current to be imported by the chargers. The processor is further configured to calculate an available current associated with the chargers based on the upper threshold of a main current flowing through the main breaker. The processor is further configured to generate a modulated charging profile based on the available current in response to the main current measurement exceeding the upper threshold. The processor is further configured to submit the modulated charging profile to the chargers to suppress the main current.

An embodiment of the present invention provides a method for charger management, comprising obtaining a main current measurement associated with a main breaker and import current measurements associated with a plurality of chargers. The method further comprises generating a default charging profile based on a maximum charging capacity of the chargers until the main current measurement exceeds an upper threshold, wherein the default charging profile defines a charging current to be imported by the chargers. The method further comprises calculating an available current associated with the chargers based on the upper threshold of a main current flowing through the main breaker. The method further comprises generating a modulated charging profile based on the available current in response to the main current measurement exceeding the upper threshold. The method further comprises submitting the modulated charging profile to the chargers to suppress the main current.

More specifically, a first aspect of the disclosure provides a charger management device, comprising: one or more interfaces, configured to: obtain main current measurement (MC) associated with a main breaker (MB) and import current measurement (Ica~Icn) associated with a plurality of chargers; a memory; and a processor, wherein the processor is configured to: generate a default charging profile (DCP) based on a maximum charging capacity of the chargers until the main current measurement (MC) exceeds an upper threshold, wherein the default charging profile (DCP) defines a charging current (Ic) to be imported by the chargers; calculate an available current (Ic_av) associated with the chargers based on the upper threshold of a main current (Im) flowing through the main breaker (MB); generate a modulated charging profile (MCP) based on the available current (Ic_av) in response to the main current measurement (MC) exceeding the upper threshold; and submit the modulated charging profile (MCP) to the chargers to suppress the main current (Im).

In a first embodiment of the first aspect, the available current (Ic_av) at a present iteration is derived by adding an import current measured by the chargers with a difference between the upper threshold and the import current measurement (Ica~Icn) obtained at the present iteration.

In a second embodiment of the first aspect, the processor is configured to: compare a proposed charging current derived from the modulated charging profile (MCP) with a previously submitted charging current; limit a change in the charging current (Ic) to a predefined adjustment increment in response to a difference between the proposed charging current and the previously submitted charging current exceeding the predefined adjustment increment; set the charging current (Ic) to a minimum threshold associated with the chargers in response to the charging current (Ic) falling below the minimum threshold; and submit the charging current (Ic) to the chargers as part of the modulated charging profile (MCP) after setting the charging current (Ic) to the minimum threshold.

In a third embodiment of the first aspect, the processor is configured to: determine an update delay time of the import current measurement (Ica~Icn) from the chargers that falls within a predefined range; transmit the modulated

charging profile (MCP) to the chargers at intermittent intervals in response to the update delay time falling within the predefined range; monitor an acknowledgment response from the chargers following transmission of the modulated charging profile (MCP); record an acknowledgment from the chargers, wherein the acknowledgment indicates receipt of the modulated charging profile (MCP); calculate a left-over time based on a predefined freeze duration and a processing duration; generate a subsequent modulated charging profile using updated current measurement; and transmit the subsequent modulated charging profile to the chargers in response to the acknowledgment being received or the left-over time has elapsed.

In a fourth embodiment of the first aspect in combination with the first embodiment of the first aspect, the processor is configured to: determine an update delay time of the import current measurement (Ica~Icn) exceeds a first predefined delay time; verify the import current measurement (Ica~Icn) transmitted from the chargers as invalid import current measurement in response to determining that the update delay time of the import current measurement (Ica~Icn) exceeds the first predefined delay time; and update the available current (Ic_av) based on the upper threshold, the main current measurement (MC) at the present iteration, and valid import current measurement obtained at a previous iteration; and submit the modulated charging profile (MCP) based on the available current (Ic_av) to the chargers with the valid import current measurement.

In a fifth embodiment of the first aspect, the main breaker (MB) imports the main current (Im) from a grid, exports the charging current (Ic) to the chargers, and exports a building current (Ib) to at least one load of a building; and the upper threshold is equal to or less than a rated capacity of the main breaker (MB).

In a sixth embodiment of the first aspect, the processor is configured to: determine an update delay time of the main current measurement (MC) exceeds a second predefined delay time; update the available current (Ic_av) based on a difference between a main breaker rated current and a building breaker rated current in response to determining that the update delay time of the main current measurement (MC) exceeds the second predefined delay time; and submit the modulated charging profile (MCP) based on the available current (Ic_av) to the chargers.

In a seventh embodiment of the first aspect, the processor is configured to: receive a gradient value representing a change rate of the main current measurement (MC) over a predefined time interval; compare the gradient value against a predefined gradient threshold; and initiate a modulation process to update the modulated charging profile (MCP) of the chargers in response to the gradient value exceeding the predefined gradient threshold.

In an eighth embodiment of the first aspect, the processor is configured to: identify a phase connection type of each of the chargers; calculate a phase available current for one of a plurality of phase lines; and generate a phase-specific modulated charging profile for each of the chargers based on the phase connection type and the phase available current.

In a ninth embodiment of the first aspect in combination with the eighth embodiment of the first aspect, the processor is configured to: determine a multi-phase line connection of the chargers, wherein the multi-phase line connection comprises a combination of at least two of the phase lines; calculate a proposed charging current for the chargers based on a minimum available current among the at least two of the phase lines; adjust the modulated charging profile (MCP) to limit the charging current (Ic) to the minimum available current across the at least two of the phase lines; and submit the modulated charging profile (MCP) to the chargers to regulate the charging current (Ic).

In a tenth embodiment of the first aspect, the processor is configured to: retrieve historical charging measurement from a charger database; determine a charging status of each of the chargers; exclude fully charged chargers from a current redistribution process; and reallocate an unused current (Iu) to charging chargers based on the modulated charging profile (MCP) of each of the chargers.

In an eleventh embodiment of the first aspect, the processor is configured to: stop charging in response to the main current (Im) meeting a maximum rated capacity of the main breaker (MB) or an available power capacity being zero; or maintain the modulated charging profile (MCP) of each of the chargers in response to the available power capacity being unchanged from a previous iteration.

In a twelfth embodiment of the first aspect, the processor is configured to assign and adjust a charging limitation for each of the chargers based on a difference from a previously submitted limitation.

In a thirteenth embodiment of the first aspect in combination with the twelfth embodiment of the first aspect, the processor is configured to: compare a difference between the charging limitation and the previously submitted limitation with a current adjustment threshold; increment the charging limitation by a first predefined current value in response to the difference exceeding the current adjustment threshold; set the charging limitation to a second predefined current value in response to the charging limitation falling below the second predefined current value; transmit the charging limitation to the chargers; suspend further adjustment of the charging limitation for a waiting period; and perform a subsequent comparison and adjustment of the charging limitation after the waiting period has elapsed, wherein the current adjustment threshold defines a minimum allowable change in charging current (Ic) required to trigger an update to the charging limitation.

A second aspect of the disclosure provides a method for charger management, comprising: obtaining main current measurement (MC) associated with a main breaker (MB) and import current measurement (Ica~Icn) associated with a plurality of chargers; generating a default charging profile (DCP) based on a maximum charging capacity of the chargers until the main current measurement (MC) exceeds an upper threshold, wherein the default charging profile

(DCP) defines a charging current (Ic) to be imported by the chargers; calculating an available current (Ic_av) associated with the chargers based on the upper threshold of a main current (Im) flowing through the main breaker (MB); generating a modulated charging profile (MCP) based on the available current (Ic_av) in response to the main current measurement (MC) exceeding the upper threshold; and submitting the modulated charging profile (MCP) to the chargers to suppress the main current (Im).

BRIEF DESCRIPTION OF THE DRAWINGS

The present invention can be more fully understood by reading the subsequent detailed description and examples with references made to the accompanying drawings, wherein:

FIG. 1 shows a power system with a charger management device according to embodiments of the present disclosure.
FIG. 2 shows a flow chart of a charging profile modulation process according to embodiments of the present disclosure.
FIG. 3 shows a flow chart of an available current calculation process according to embodiments of the present disclosure.
FIG. 4 shows a flow chart of a DLM freeze and unfreeze process according to embodiments of the present disclosure.
FIG. 5 shows a flow chart of a phase-specific charging control process according to embodiments of the present disclosure.
FIG. 6 shows a flow chart of a current redistribution process according to embodiments of the present disclosure.
FIG. 7 shows a flow chart of an electric vehicle (EV) detection process according to embodiments of the present disclosure.
FIG. 8 shows a flow chart of a digital power meter (DPM) validation determination process according to embodiments of the present disclosure.
FIG. 9 shows a flow chart of a delay-based validation determination process according to embodiments of the present disclosure.
FIG. 10 shows a flow chart of a charging limitation adjustment process according to embodiments of the present disclosure.
FIG. 11 shows a diagram of the total load for an example using the charger management device according to embodiments of the present disclosure.

**DETAILED DESCRIPTION OF THE INVENTION**

The following description is made for the purpose of illustrating the general principles of the invention and should not be taken in a limiting sense. The scope of the invention is best determined by reference to the appended claims.

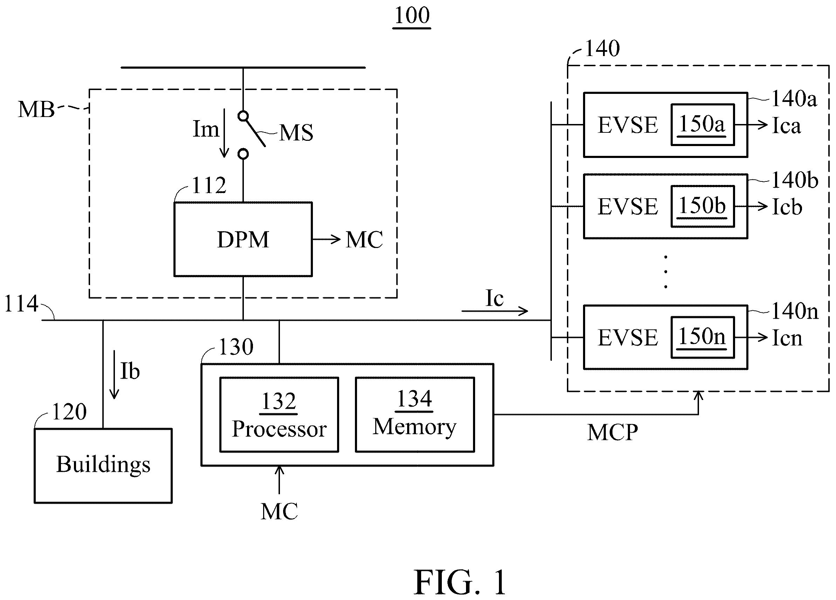

FIG. 1 shows a power system 100 with a charger management device 130 according to embodiments of the present disclosure. The power system 100 includes a main breaker MB and a power bus 114, where the main breaker MB includes a breaker MS and a digital power meter (DPM) 112, where the breaker MS is configured to be opened (i.e., turned off) when a main current Im reaches a maximum capacity Imax of the main breaker MB. The DPM 112 is configured to monitor the main current Im to generate main current measurement MC. Under normal conditions, the breaker MS is closed (i.e., turned on), allowing the main current Im to be output to buildings 120 and a charging station 140 through the power bus 114. The charging station 140 includes electric vehicle supply equipment (EVSE) (or EV chargers) 140a to 140n. The buildings 120 receive a building current Ib, while the EVSEs 140a to 140n receive a charging current Ic.

The charger management device 130 is coupled to the EVSEs 140a to 140n to monitor the charging current Ic. Specifically, the power bus 114 outputs the building current Ib and the charging current Ic separately so that the charger management device 130 can monitor the charging current Ic without being interrupted by the building current Ib. Each of a plurality of charger meters 150a to 150n is included in the corresponding EVSEs 140a to 140n. For example, the EVSE 140a includes the charger meter 150a, and the EVSE 140n includes the charger meter 150n. The charger meters 150a to 150n monitor the corresponding EVSEs 140a to 140n to generate and output import currents Ica to Icn to the charger management device 130.

The charger management device 130 includes a processor 132 and a memory 134. The processor 132 is configured to perform a dynamic load management process according to the main current measurement MC and the import current measurement Ica to Icn. Additionally, the processor 132 outputs (default or modulated) charging profiles to the EVSEs 140a to 140n to adjust the charging current Ic. The memory 134 stores and outputs the main current measurement MC and the import current measurement Ica to Icn to the processor 132, where the main current measurement MC and the import current measurement Ica to Icn are received by a plurality of interfaces of the charger management device 130. Based on the received main current measurement MC and import current measurement Ica to

Icn, the charger management device 130 generates and outputs a modulated charging profile MCP to the EVSEs 140a to 140n to adjust a charging current of each of the EVSEs 140a to 140n.

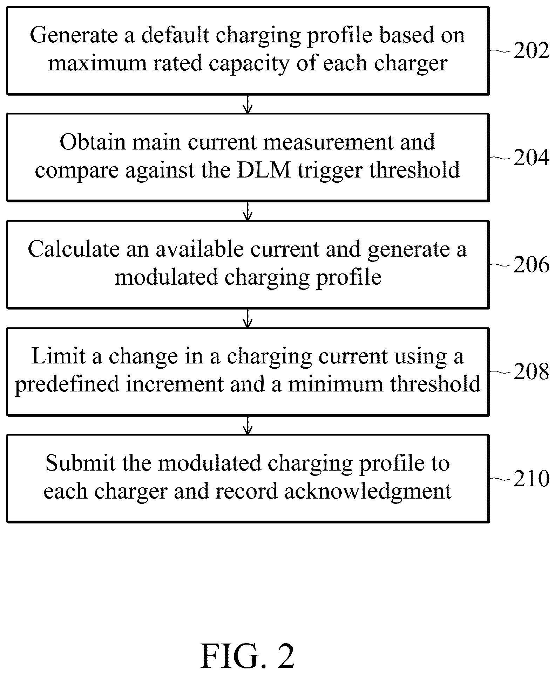

FIG. 2 shows a flow chart of a charging profile modulation process according to embodiments of the present disclosure. At step 202, upon initialization, the charger management device 130 generates a default charging profile DCP to set the charging current Ic to a predefined value based on the maximum charging capacity of each of the EVSEs 140a to 140n. That is, upon initialization, all of the EVSEs 140a to 140n are set to charge at their maximum charge rate. Next, at step 204, the DPM 112 generates and outputs the main current measurement MC to the charger management device 130. The processor 132 compares the main current measurement MC with a dynamic load management (DLM) trigger threshold Itrg to determine whether to activate the DLM.

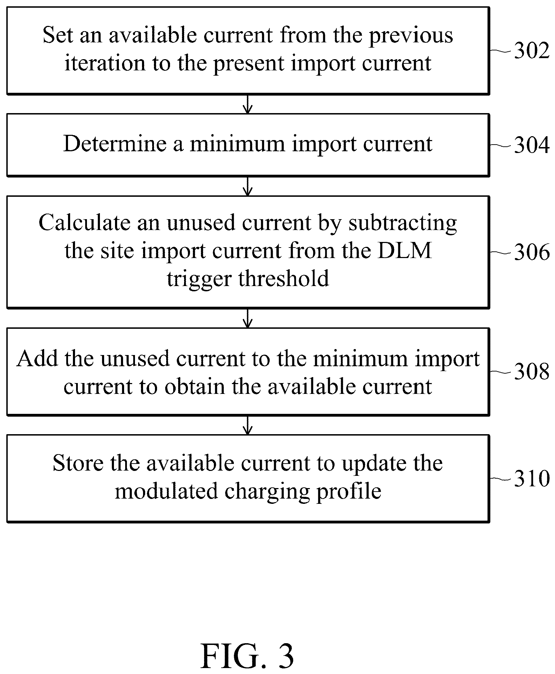

If the main current measurement MC reaches the DLM trigger threshold Itrg, the processor 132 activates the DLM and, at step 206, calculates an available current Ic_av based on the main current Im and the maximum capacity Imax of the main breaker MB (this step will be described in detail regarding FIG. 3). After determining the available current Ic_av, the processor 132 generates the modulated charging profile MCP to distribute the available current Ic_av to each of the EVSEs 140a to 140n. Then, at step 208, the processor 132 determines a difference between the present charging current of the modulated charging profile MCP and a previous charging current (in this embodiment, the default charging current).

If the difference exceeds a predefined increment (e.g., the current difference reaches 5A), the processor 132 limits the change in the present charging current to the predefined increment to avoid a large change in the charging current Ic, where the large change may cause the main current Im to reach or exceed the maximum capacity Imax of the main breaker MB. Additionally, the processor 132 also limits the charging current to be not less than a minimum threshold (e.g., the charging current Ic should be equal to at least 6A). This ensures that the EVSEs 140a to 140n in use function normally with sufficient current capacity.

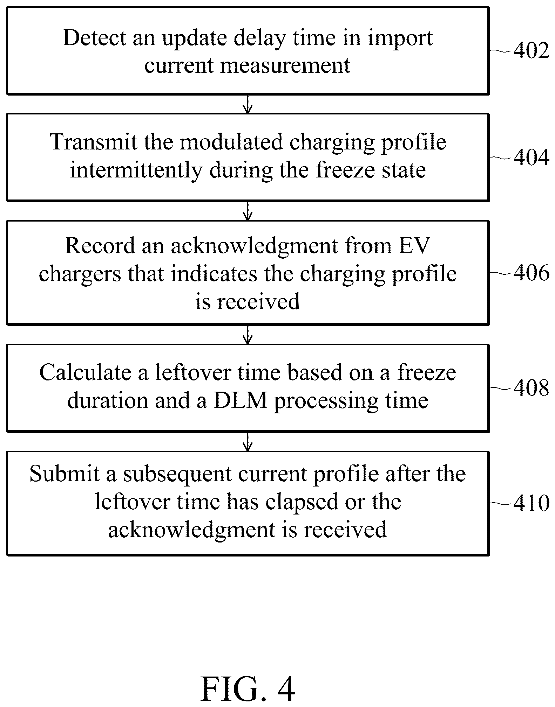

Then, at step 210, the processor 132 submits the modulated charging profile MCP to adjust the charging current Ic of each of the EVSEs 140a to 140n. Then, the charger management device 130 waits for each of the EVSEs 140a to 140n to return an acknowledgment (this will be described in detail regarding FIG. 4), indicating that the modulated charging profile MCP is received by each of the EVSEs 140a to 140n, and that the charging current of each of the EVSEs 140a to 140n is successfully adjusted. If the main current measurement MC is less than the DLM trigger threshold Itrg, the processor 132 will not activate the DLM, and the EVSEs 140a to 140n operate according to the default charging profile DCP. Additionally, if all of the EVSEs 140a to 140n are not charging, the processor 132 will not activate the DLM.

In an embodiment, it assumes that the DLM has been activated. As a result, instead of the DLM trigger threshold Itrg, the processor 132 compares the main current measurement MC with a DLM release threshold Ire. If the main current measurement MC is not less than the DLM release threshold Ire, the processor 132 keeps the DLM active. If the main current measurement MC is less than the DLM release threshold Ire, the processor 132 determines whether the EVSEs 140a to 140n in use are charging at the maximum rated capacity. If not (i.e., there is unused charging capacity), the processor 132 keeps the DLM active and performs the DLM charging control process to adjust the charging current of each of the EVSEs 140a to 140n. If all of the EVSEs 140a to 140n in use are charging at their maximum rated capacity, the processor 132 deactivates the DLM and submits the default charging profile DCP, causing the EVSEs 140a to 140n to resume default charging (i.e., charging at the maximum rated capacity).

FIG. 3 shows a flow chart of an available current calculation process according to embodiments of the present disclosure. As mentioned above, in response to the DLM being activated, the processor 132 calculates the available current Ic_av for current redistribution of the EVSEs 140a to 140n. At step 302, the processor 132 sets the available current Ic_av from a previous iteration (e.g., the previous time that the modulated charging profile MCP is submitted) to the present import current (i.e., the present charging current Ic). This ensures the continuity of the charging current Ic of the EVSEs 140a to 140n. Next, at step 304, the processor 132 determines a minimum import current for each of the EVSEs based on the available current Ic_av and the main current Im. Specifically, the processor 132 selects the lesser of the available current Ic_av and the main current Im as the minimum import current for the EVSEs 140a to 140n. This ensures that the charging current Ic (i.e., the sum of the import currents of the EVSEs 140a to 140n) will not exceed the maximum capacity Imax of the main breaker MB.

Then, at step 306, the processor 132 calculates an unused current Iu of the power system 100. The unused current Iu is the difference between the DLM trigger threshold Itrg and the main current Im (i.e., the site import current). At step 308, the available current Ic_av is obtained by adding the unused current Iu to the minimum import current of the EVSEs 140a to 140n. After the available current Ic_av is obtained, the memory 134 stores the available current Ic_av to update the modulated charging profile MCP. Then, the processor 132 proceeds to submit the updated modulated charging profile MCP to each of the EVSEs 140a to 140n.

FIG. 4 shows a flow chart of a DLM freeze and unfreeze process according to embodiments of the present disclosure. To determine whether to activate the DLM, the charger management device 130 receives the import current measurements Ica to Icn from the EVSEs 140a to 140n. However, delays may exist during the transmission of the import current measurements Ica to Icn, causing the present import current measurements Ica to Icn to be unstable. As a result, the status (e.g., active or inactive) of the DLM might not be suitable for the present condition. Therefore, the DLM must be

frozen when the input data of the charger management device 130 is unstable.

At step 402, the processor 132 detects a delay time of the import current measurements Ica to Icn. If the delay time reaches a predefined threshold (e.g., 30 seconds), the processor 132 initiates a DLM freeze process and maintains the current state of the DLM (i.e., enters a freeze state) to stabilize the charging current Ic when the present import current measurements Ica to Icn are unclear. At step 404, the processor 132 submits the modulated charging profile MCP intermittently during the freeze state. Specifically, after entering the freeze state, the processor 132 submits the modulated charging profile MCP at a controlled interval (e.g., every one second) to stabilize the status (e.g., the import current) of each of the EVSEs 140a to 140n. That is, even if the processor 132 cannot confirm the present status of the EVSEs 140a to 140n, it can still control the EVSEs 140a to 140n by maintaining the import currents to keep the charging current Ic (and the main current Im) stable.

Next, at step 406, the processor 132 records the acknowledgment from the EVSEs 140a to 140n. If the acknowledgment is recorded (i.e., the modulated charging profile is received by the EVSEs 140a to 140n), at step 408, the processor 132 determines a leftover time since the processor 132 has entered the freeze state. The leftover time is calculated by subtracting a DLM processing time (i.e., the period since the processor 132 has activated the DLM) from a freeze duration (i.e., the maximum duration for the freeze state). Next, at step 410, if the leftover time has elapsed (i.e., the leftover time is zero) or the acknowledgment is recorded, the processor 132 is unfrozen and submits the subsequent modulated charging profile MCP. If the leftover time has not elapsed, the processor 132 waits until the leftover time reaches zero or the acknowledgment is recorded, then submits the modulated charging profile MCP to the EVSEs 140a to 140n.

Through the freeze/unfreeze process, the processor 132 ensures that the main current Im will not exceed the maximum capacity Imax of the main breaker MB even when the import current measurements Ica to Icn are unstable (e.g., the transmission of the measurements is delayed). Additionally, by introducing the leftover time, the processor 132 ensures that the EVSEs 140a to 140n have enough time to react and process the modulated charging profile MCP (e.g., receive the charging profiles and output acknowledgments). For example, a suitable freeze duration can ensure that no new charging profiles will be submitted while the EVSEs 140a to 140n are still adjusting their import currents, thereby avoiding data conflict.

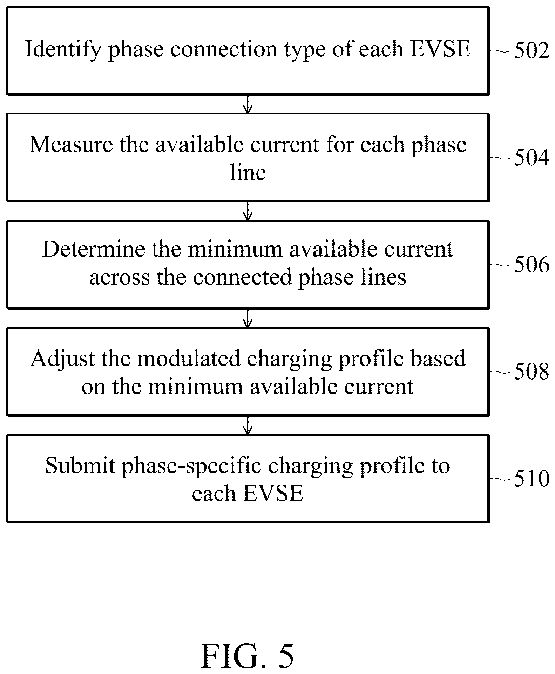

FIG. 5 shows a flow chart of a phase-specific charging control process according to embodiments of the present disclosure. Power grids can be single-phased or multi-phased. Therefore, a phase-specific charging control mechanism is introduced to enhance the accuracy of the DLM. At step 502, the charger management device 130 identifies the phase connection type of each of the EVSEs 140a to 140n. For example, if there are three phase lines L1, L2, and L3 connected to the charging station 140, the EVSE 140a may be only connected to phase line L2, while the EVSE 140n may be connected to all three of the phase lines L1, L2, and L3.

After the phase connection types of all of the EVSEs 140a to 140n are identified, at step 504, the processor 132 calculates the available current Ic_av for each of the phase lines L1, L2, and L3. Each phase line may have different available currents. In an embodiment, assume that the processor 132 is calculating the import current for the EVSE 140n, which is identified as a multi-phase EVSE. To ensure that the phase-specific available current for EVSE 140n will not exceed the current capacity of all phase lines L1, L2, and L3, at step 506, the processor 132 determines the minimum available current among the available currents Ic_av of all three phase lines L1, L2, and L3. Next, at step 508, the processor 132 adjusts the modulated charging profile MCP for EVSE 140n according to the minimum available current.

In another embodiment, assume that the processor 132 is calculating the phase-specific available current for EVSE 140a, which is identified as a single-phase EVSE. Then, at step 506, the processor 132 only calculates the available current Ic_av for the connected phase line (e.g., phase line L2). Next, at steps 508 and 510, the processor 132 adjusts the modulated charging profile MCP for EVSE 140a according to the available current Ic_av of the connected phase line. After all phase-specific available currents are determined, at step 510, the processor 132 submits the phase-specific modulated charging profile MCP to EVSEs 140a to 140n.

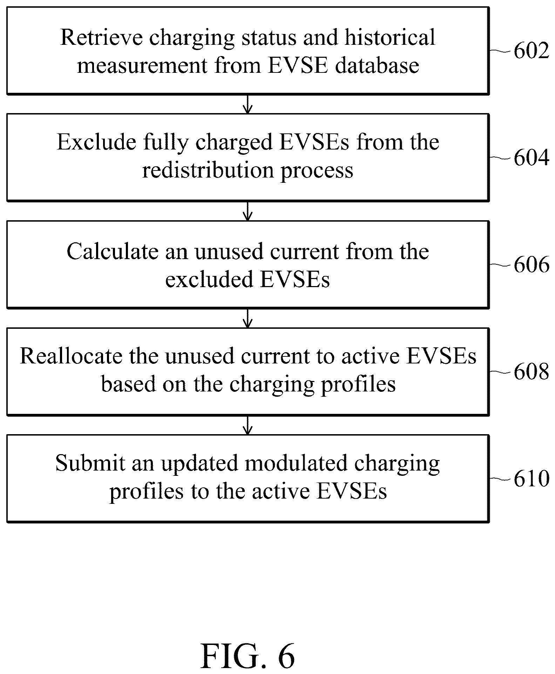

FIG. 6 shows a flow chart of a current redistribution process according to embodiments of the present disclosure. In this embodiment, the current redistribution process is performed using the proportional distribution. At step 602, the processor 132 obtains historical data and the charging status (e.g., charging or standby) of the EVSEs 140a to 140n from the import current measurements Ica to Icn that are stored in the memory 134. After retrieving the import current measurements Ica to Icn from the database of EVSEs 140a to 140n, at step 604, the processor 132 excludes the EVSEs that are not charging. That is, the excluded EVSEs are in standby mode, and their import current measurements may be zero. At step 606, the processor 132 calculates the unused current Iu of the excluded EVSEs, and at step 608, reallocates the unused current Iu to the EVSEs 140a to 140n that are still charging (e.g., in active mode). Next, at step 610, the processor 132 submits the modulated charging profile MCP to the EVSEs 140a to 140n to adjust the import currents of the EVSEs 140a to 140n.

The reallocation (or redistribution) of the import currents of the EVSEs 140a to 140n can be performed according to other distribution methods. In an embodiment, the reallocation process is performed using first-in, first-out (FIFO) distribution. At step 602, besides retrieving the import current measurements Ica to Icn from the EVSE database (e.g., from memory 134 or clouds connected with the charger management device 130), timestamps corresponding to the import

current measurements Ica to Icn are retrieved. Then, the import current measurements Ica to Icn are stored according to the sequence of the timestamps. Then, the processor 132 checks and calculates the minimum available current for each of the EVSEs 140a to 140n according to the sequence of the timestamps. If the minimum available current is less than the minimum current capacity of an EVSE, i.e., the available current Ic_av of this EVSE is lower than the minimum current that allows the EVSE to function normally, the charging profile (or the information corresponding to the EVSE in the modulated charging profile MCP) is set to zero. After checking all of the EVSEs 140a to 140n, at step 610, the processor 132 submits the modulated charging profile MCP to the EVSEs 140a to 140n to adjust their import currents.

In an embodiment, the reallocation process is performed using the even distribution. Instead of lining up the import current measurements Ica to Icn according to the corresponding timestamps, the processor 132 calculates an even current for the EVSEs 140a to 140n by dividing the available current Ic_av by the number of the EVSEs 140a to 140n. Then, the processor 132 compares the even current with the minimum current capacity of the EVSEs 140a to 140n. If the even current is less than the minimum current capacity, it is set to the minimum current capacity (or to the available current Ic_av if that is lower). After checking all of the EVSEs 140a to 140n, at step 610, the processor 132 submits the modulated charging profile MCP to the EVSEs 140a to 140n to adjust their import currents.

In an embodiment, the reallocation process is performed using the highest state of charge (SOC) distribution. The EVSE with the highest SOC indicates that the EVSE has reached its maximum capacity and is storing the largest amount of electrical energy possible. Therefore, the processor 132 retrieves the SOC of each of the EVSEs 140a to 140n and stores the import current measurements Ica to Icn according to the SOCs. Then, based on the sequence of the EVSEs 140a to 140n corresponding to the stored import current measurements Ica to Icn, the processor 132 calculates and reallocates the import current of each of the EVSEs 140a to 140n. After checking all of the EVSEs 140a to 140n, at step 610, the processor 132 submits the modulated charging profile MCP to the EVSEs 140a to 140n to adjust their import currents.

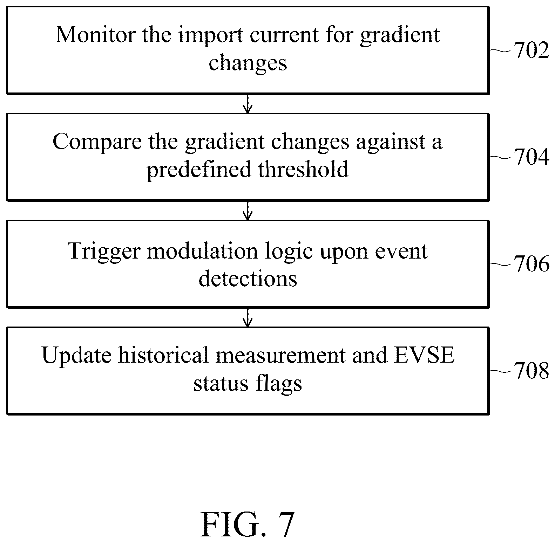

FIG. 7 shows a flow chart of an electric vehicle (EV) detection process according to embodiments of the present disclosure. After the DLM is triggered, the processor 132 calculates the gradient of the main current Im. If the gradient does not reach a predefined total gradient threshold, at steps 702 and 704, the processor 132 monitors and compares the gradient of the import currents of the EVSEs 140a to 140n with a predefined import gradient threshold. If EV arrival/departure events exist, the change in the import currents will reach the import gradient threshold. Then, at step 706, the processor 132 determines an EV arrival/departure event and triggers the charging current modulation process upon detecting the event. Next, at step 708, the processor 132 updates the historical data and charging status of the EVSEs 140a to 140n according to the arrival/departure events.

Through the EV detection process, the historical data and charging status required in the current redistribution process are updated every time an EV arrival/departure event occurs. As a result, the charger management device 130 can perform real-time adjustments on the import current of each of the EVSEs 140a to 140n.

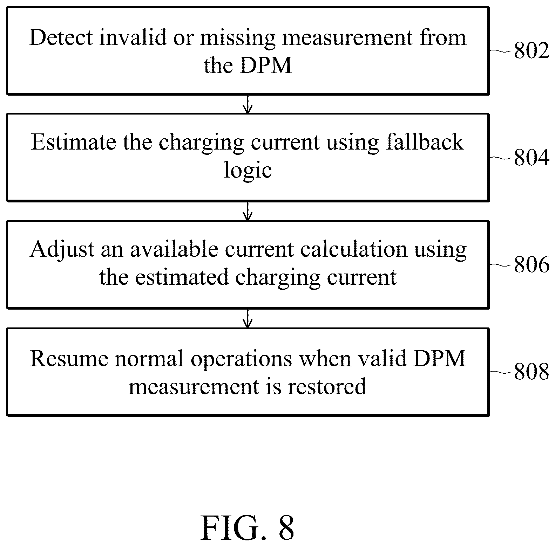

FIG. 8 shows a flow chart of a digital power meter (DPM) validation determination process according to embodiments of the present disclosure. As mentioned in FIG. 4, the import current measurements Ica to Icn may have delay times due to unstable transmission. Accordingly, the DPM 112 may also suffer from transmission delays, causing the main current measurement MC, or the import current measurements Ica to Icn, to be unstable. Therefore, at step 802, the processor 132 detects whether the main current measurement MC and/or the import current management Ica to Icn from the DPM 112 are valid. If an invalid or missing measurement is detected (e.g., through the timestamp corresponding to each measurement), at step 804, the processor 132 estimates the present charging current Ic using fallback logic.

For example, to estimate the present charging current Ic, the charger management device 130 subtracts the building breaker rated capacity from the maximum rated capacity of the main breaker MB, unless the building current Ib equals the uncontrollable building load breaker maximum rated capacity. In such case, the available current is calculated as:

Available Current = Main Breaker Rated Capacity - Building Breaker Rated Capacity (excluding EVSE-DB breaker)

Assumes that the building breaker rated capacity is 31A, and the maximum rated capacity of the main breaker MB is 100A. If the main current measurement MC is invalid, the processor 132 subtracts the building breaker rated capacity from the main breaker rated capacity (100A - 31A), obtaining an estimated charging current Ic of 69A. If the building current Ib equals the uncontrollable building breaker maximum rated capacity, the same calculation applies. Then, at step 806, the processor 132 calculates the available current Ic_av according to the estimated charging current Ic. If a valid main current measurement MC is detected, the processor 132 resumes the normal current measurement modulation process at step 808.

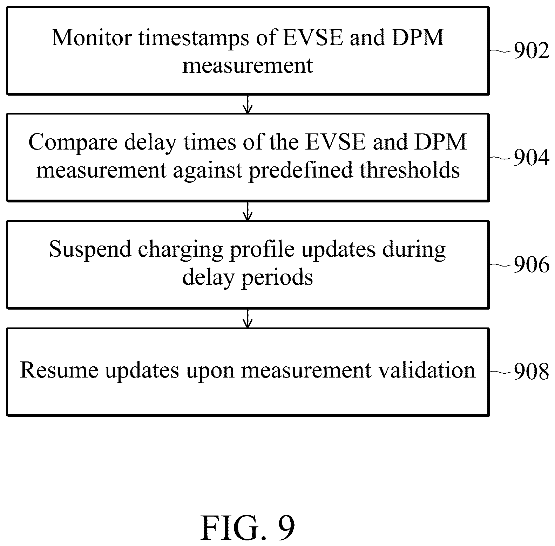

FIG. 9 shows a flow chart of a delay-based validation determination process according to embodiments of the present disclosure. The transmissions of the main current measurement MC, the import current measurements Ica to Icn, and the charging profiles all take time. If the modulated charging profile MCP is updated while the previous modulated

charging profile MCP is still being transmitted, or while the EVSEs 140a to 140n are still adjusting according to the previous modulated charging profile MCP, data conflicts may occur. Therefore, the charger management device 130 is set to space a suitable period between any two updates of the modulated charging profile MCP.

At step 902, the processor 132 monitors the timestamps of the main current measurement MC from the DPM 112 and the import current measurements Ica to Icn of the EVSEs 140a to 140n. At step 904, the processor 132 calculates the delay times of the main current measurement MC and the import current measurements Ica to Icn according to the timestamps. It is noted that this delay time is different from the delay times mentioned in FIG. 4. The delay times in FIG. 9 indicate that the EVSEs 140a to 140n are adjusting their import currents normally, while in FIG. 4, the delay time indicates that there are transmission errors and that the EVSEs 140a to 140n are unstable.

Then, the processor 132 compares the delay times of the main current measurement MC and the import current measurements Ica to Icn with their respective delay time thresholds. If the delay times have not reached the thresholds, at step 906, the processor 132 suspends the updates of the modulated charging profile MCP (or the default charging profile DCP when the DLM is not triggered). If the delay times have elapsed, at step 908, the processor 132 resumes the updates and determines the validation (as mentioned in FIGS. 4 and 8) of the modulated charging profile MCP (or the default charging profile DCP).

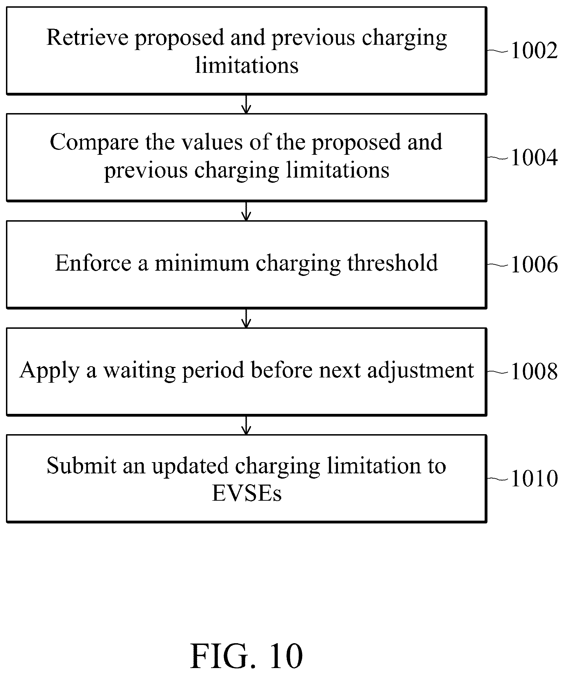

FIG. 10 shows a flow chart of a charging limitation adjustment process according to embodiments of the present disclosure. To prevent the main current Im from exceeding the maximum rated capacity of the main breaker MB, the gradient of the charging current Ic of the EVSEs 140a to 140n needs to be limited. For example, assume that all of the EVSEs 140a to 140n are in standby mode. Then, all of the EVSEs 140a to 140n are activated during the same modulation interval, causing the charging current Ic to increase rapidly. If the increment of the import current of each of the EVSEs 140a to 140n is not limited, the charging current Ic may easily cause the main current Im to exceed the maximum rated capacity of the main breaker MB.

At steps 1002 and 1004, the processor 132 retrieves and compares the previous and proposed charging limitations. If a proposed charging limitation (i.e., the present charging current Ic) is larger than a previous charging limitation, the processor 132 determines a difference between the previous and proposed charging limitations. After this adjustment, the processor 132 determines whether the calculated charging profile for any EVSE falls below its minimum charging requirement. If yes, the processor removes that EVSE from the active modulation set and redistributes the available current among the remaining EVSEs before proceeding. Then, at step 1006, the processor 132 determines whether the proposed charging limitation is less than a predefined current value (e.g., the minimum import current for the EVSEs 140a to 140n).

If yes, the processor 132 sets the proposed charging limitation to the predefined current value to ensure the EVSEs 140a to 140n function normally. If no, at step 1008, the processor 132 waits for the delay time (i.e., the waiting period to ensure that data conflicts will not occur) to elapse. If the delay time has elapsed, the processor 132 performs another adjustment to the proposed charging limitation. Then, at step 1010, the processor 132 submits the modulated charging profile MCP with an updated charging limitation to the EVSEs 140a to 140n.

TABLE 1 illustrates an example of the gradual modulation in charging limitations, where "CL" represents "charging limitation", and the proposed charging limitation is calculated based on the available current Ic_av. Assumes that the predefined current adjustment threshold is 5A, and the minimum current value is 6A:

TABLE 1

| Iteration | Import Current | Proposed CL | Updated CL |
|---|---|---|---|
| 1 | 20A | 0A | 0A |
| 2 | 0A | 22A | 6A |
| 3 | 6A | 16A | 11A |
| 4 | 11A | 22A | 16A |
| 5 | 16A | 21A | 21A |

In the first iteration, the proposed charging limitation sets the present import current to 0A. In the second iteration, the proposed charging limitation is larger than the previous charging limitation (i.e., 22A > 0A), and their difference is larger than the predefined current adjustment limitation (i.e., 22 - 0 = 22 > 5). As a result, the proposed charging limitation is set to 5A (i.e., 5 + 0 = 5). However, since the proposed charging limitation is now less than 6A, the processor 132 sets the proposed charging limitation to 6A. Next, in the third iteration, the present import current is 6A, and the proposed charging limitation is 16A. Repeating the above steps, the proposed charging limitation is first set to 6A (i.e., the proposed charging limitation of the second iteration), and then set to 11A (i.e., 6 + 5 = 11). Through each iteration, the proposed charging limitation (i.e., the updated CL) gradually increases by 5A, ensuring that the main current Im will not increase too much due

to the rapid changes in the charging current Ic.

TABLE 2 illustrates a simplified DLM process provided in the present disclosure, where "TS" represents "threshold" and "CP" represents "charging profile":

TABLE 2

| Main Current | Hit Gradient TS? | Update CP? | Proposed CP |
|---|---|---|---|
| < DLM release TS | No | Yes | Default CP |
| ≥ DLM release TS<br>< DLM trigger TS | No | No | No change in CP |
| ≥ DLM trigger TS | No | Yes | Modulated CP |
| > Max. capacity | No | Yes | Set CP to zero |
| < DLM release TS | Yes | Yes | Default CP |
| ≥ DLM release TS<br>< DLM trigger TS | Yes | Yes | Modulated CP |
| ≥ DLM trigger TS | Yes | Yes | Modulated CP |
| > Max. capacity | Yes | Yes | Set CP to zero |

According to TABLE 2, the DLM process is triggered when the main current Im reaches DLM trigger threshold Itrg, or when the gradient threshold is hit. Additionally, when the main current Im reaches or exceeds the maximum rated capacity of the main breaker MB, the charger management device 130 sets the charging current Ic to zero immediately to prevent thermal or other damage to the power system 100.

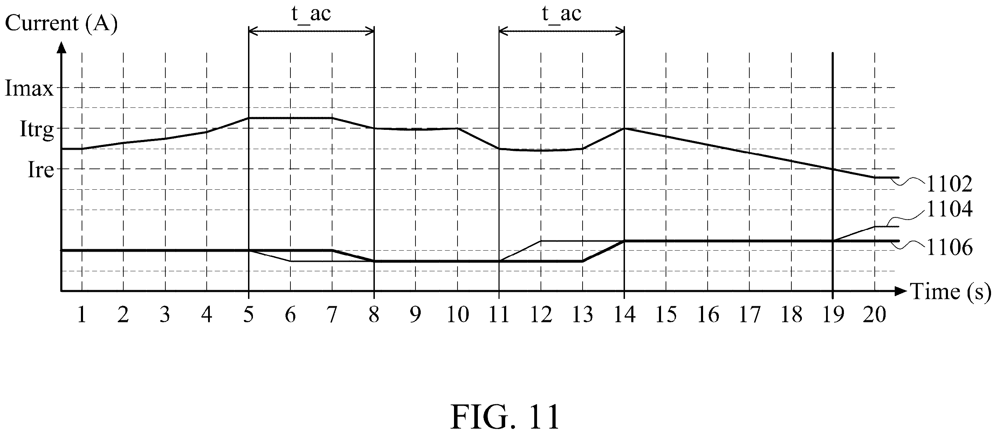

FIG. 11 shows a diagram of the total load for an example using the charger management device according to embodiments of the present disclosure. Referring to FIG. 11, lines 1102, 1104, and 1106 represent the current values of the main current Im, the proposed current limitation, and the sum of the import current measurements Ica to Icn, respectively. Assumes that each iteration (or modulation interval) is one second. During the 1st to 4th seconds, the main current Im is below the DLM trigger threshold Itrg. Therefore, the charger management device 130 does not trigger the DLM process. Additionally, the changes in the main current Im does not hit the gradient threshold (e.g., 5A). Thus, no updates are made to the charging current Ic, and the processor 132 keeps on submitting the default charging profile DCP to the EVSEs 140a to 140n.

At the 5th second, the processor 132 detects that the main current Im hits the DLM trigger threshold Itrg. As a result, the DLM is triggered, and the modulated charging profile MCP is submitted to the EVSEs 140a to 140n to lower the charging limitation of the charging current Ic. After waiting for a delay time t_ac, the charging current Ic is lowered, causing the main current Im to decrease. However, the main current Im is still greater than the DLM release threshold Ire. Therefore, the DLM remains active. Next, at the 10th second, the main current Im decreases by a gradient of 5A. Since the gradient threshold is hit, the processor 132 updates the modulated charging profile MCP to increase the charging current Ic. After the delay time t_ac has elapsed, the charging current Ic increases.

It is noted that, though the main current Im increases with a gradient of 5A at the 13th second, the processor 132 is still waiting for the delay time t_ac to elapse. Therefore, no update on the charging profiles is made. Then, at the 19th second, the main current Im decreases to be less than the DLM release threshold. As a result, the DLM is deactivated, and the processor 132 updates the charging profiles again to adjust the charging current Ic of the EVSEs 140a to 140n.

In operation, a charger management device 130 having a processor 132 uses phase-resolved measurements to build inputs for modulation, wherein phase-resolved measurements are line-specific readings for each available phase (e.g., L1, L2, L3) obtained from a main meter such as a digital power meter (DPM) 112 at a main breaker MB and from EVSE meters within EVSEs 140a to 140n, so that subsequent calculations and controls are performed per phase rather than only on an aggregate value. The processor 132 can maintain a topology record that stores, for each of the EVSEs 140a to 140n, the EVSE-to-phase mapping (single-phase or a specified combination of phase lines L1, L2, and/or L3), an effective rated charging capacity at connector level (which can be adjusted for EVSE efficiency in some implementations), and a charging status (e.g., charging or fully charged/standby), and the topology record can further store site parameters used by the control loop including a trigger threshold that activates modulation, a release threshold that permits return to default charging, and a gradient threshold used to decide when a change in total load is large enough to justify an update. The processor 132 computes a derivative of the main or total load between consecutive control intervals and applies gradient gating by comparing the change to the gradient threshold. When the change does not meet the gradient threshold and no other activation condition applies, the processor 132 can defer profile updates to improve stability.

For each control interval, the processor 132 uses the phase-resolved measurements together with the site parameters to produce per-phase available current (e.g., the controllable capacity remaining on each of phase lines L1, L2, and L3 after considering site limits and existing imports as read by DPM 112) and to compute unused_current that can be redistributed among charging EVSEs. Using the topology record, the processor 132 applies per-EVSE phase limiting by constraining a single-phase EVSE to the available current on its connected line and, for a multi-phase EVSE, by limiting its proposal based on the most constrained of its connected lines so that no phase is over-assigned. The processor 132 then generates proportional EVSE proposed currents for EVSEs that are actively charging, where proportional means each active EVSE can be assigned a share of the presently available pool in proportion to its effective rated capacity within the active set, while excluding EVSEs that are not charging or are fully charged. In an implementation, the processor 132 can enforce a 6A minimum by treating any sub-minimum proposal as ineligible for the present interval and redistributing that EVSE's share to the remaining active EVSEs until the remaining proposals meet or exceed 6 A, or the active set is exhausted; the processor 132 can also enforce no more than a 5 A change per interval for each EVSE relative to the previously submitted value so that ramping occurs in gradual steps and overshoot is reduced. The processor 132 can assemble the resulting per-EVSE values-already constrained by the per-phase limits, the 6A minimum, and the ≤ 5 A step size-into a modulated charging profile that can be submitted to the EVSEs 140a to 140n.

The processor 132 activates modulation when the total load meets or exceeds the trigger threshold or when the derivative computation and gradient gating authorize an update because the observed change meets or exceeds the gradient threshold. Additionally, the processor 132 releases modulation when the release threshold condition is satisfied and when available capacity indicates that default charging can resume without violating site limits. After transmitting a modulated charging profile, the processor 132 can enter a freeze interval and hold submitted values constant while the system waits for Accepted/Rejected status from the EVSEs 140a to 140n and, if applicable, for a configured leftover time (e.g., determined from a nominal freeze duration minus processing time) to expire before issuing the next update. If the total load reaches a maximum rated capacity at the main breaker MB, the processor 132 can apply a hard limit by setting affected EVSE charging to zero and then resume the controlled sequence described above when conditions permit, after which the loop returns to processing the phase-resolved measurements for the next interval.

In some embodiments, the term "upper threshold" is to be understood as the DLM trigger threshold described in the specification, and the term "acknowledgment" is to be understood as the charger-reported confirmation used by the processor 132 as the confirmation rule to exit a freeze state and proceed with subsequent modulation.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

**1.** A charger management device (130), comprising:

one or more interfaces, configured to:
obtain main current measurement (MC) associated with a main breaker (MB) and import current measurement (Ica~Icn) associated with a plurality of chargers (104a~140n);
a memory (134); and
a processor (132), wherein the processor is configured to:

generate a default charging profile (DCP) based on a maximum charging capacity of the chargers (104a~104n) until the main current measurement (MC) exceeds an upper threshold, wherein the default charging profile (DCP) defines a charging current (Ic) to be imported by the chargers (104a~104n);
calculate an available current (Ic_av) associated with the chargers (104a~104n) based on the upper threshold of a main current (Im) flowing through the main breaker (MB);
generate a modulated charging profile (MCP) based on the available current (Ic_av) in response to the main current measurement (MC) exceeding the upper threshold; and
submit the modulated charging profile (MCP) to the chargers (104a~104n) to suppress the main current (Im).

**2.** The charger management device (130) as claimed in claim 1, wherein the available current (Ic_av) at a present iteration is derived by adding an import current measured by the chargers (104a~104n) with a difference between the upper threshold and the import current measurement (Ica~Icn) obtained at the present iteration.

**3.** The charger management device (130) as claimed in claim 1, wherein the processor (132) is configured to:

compare a proposed charging current derived from the modulated charging profile (MCP) with a previously submitted charging current;
limit a change in the charging current (Ic) to a predefined adjustment increment in response to a difference between the proposed charging current and the previously submitted charging current exceeding the predefined adjustment increment;
set the charging current (Ic) to a minimum threshold associated with the chargers (104a~104n) in response to the charging current (Ic) falling below the minimum threshold; and
submit the charging current (Ic) to the chargers (104a~104n) as part of the modulated charging profile (MCP) after setting the charging current (Ic) to the minimum threshold.

**4.** The charger management device (130) as claimed in claim 1, wherein the processor (132) is configured to:

determine an update delay time of the import current measurement (Ica~Icn) from the chargers (104a~104n) that falls within a predefined range;
transmit the modulated charging profile (MCP) to the chargers (104a~104n) at intermittent intervals in response to the update delay time falling within the predefined range;
monitor an acknowledgment response from the chargers (104a~104n) following transmission of the modulated charging profile (MCP);
record an acknowledgment from the chargers (104a~104n), wherein the acknowledgment indicates receipt of the modulated charging profile (MCP);
calculate a left-over time based on a predefined freeze duration and a processing duration;
generate a subsequent modulated charging profile using updated current measurement; and
transmit the subsequent modulated charging profile to the chargers (104a~104n) in response to the acknowledgment being received or the left-over time has elapsed.

**5.** The charger management device (130) as claimed in claim 2, wherein the processor (132) is configured to:

determine an update delay time of the import current measurement (Ica~Icn) exceeds a first predefined delay time;
verify the import current measurement (Ica~Icn) transmitted from the chargers (104a~104n) as invalid import current measurement in response to determining that the update delay time of the import current measurement (Ica~Icn) exceeds the first predefined delay time; and
update the available current (Ic_av) based on the upper threshold, the main current measurement (MC) at the present iteration, and valid import current measurement obtained at a previous iteration; and
submit the modulated charging profile (MCP) based on the available current (Ic_av) to the chargers (104a~104n) with the valid import current measurement.

**6.** The charger management device (130) as claimed in claim 1, wherein:

the main breaker (MB) imports the main current (Im) from a grid, exports the charging current (Ic) to the chargers (104a~104n), and exports a building current (Ib) to at least one load of a building (120); and
the upper threshold is equal to or less than a rated capacity of the main breaker (MB).

**7.** The charger management device (130) as claimed in claim 1, wherein the processor (132) is configured to:

determine an update delay time of the main current measurement (MC) exceeds a second predefined delay time;
update the available current (Ic_av) based on a difference between a main breaker rated current and a building breaker rated current in response to determining that the update delay time of the main current measurement (MC) exceeds the second predefined delay time; and
submit the modulated charging profile (MCP) based on the available current (Ic_av) to the chargers (104a~104n).

**8.** The charger management device (130) as claimed in claim 1, wherein the processor (132) is configured to:

receive a gradient value representing a change rate of the main current measurement (MC) over a predefined time interval;
compare the gradient value against a predefined gradient threshold; and

initiate a modulation process to update the modulated charging profile (MCP) of the chargers (104a~104n) in response to the gradient value exceeding the predefined gradient threshold.

**9.** The charger management device (130) as claimed in claim 1, wherein the processor (132) is configured to:

identify a phase connection type of each of the chargers (104a~104n);
calculate a phase available current for one of a plurality of phase lines (L1~L3); and
generate a phase-specific modulated charging profile for each of the chargers (104a~104n) based on the phase connection type and the phase available current.

**10.** The charger management device (130) as claimed in claim 9, wherein the processor (132) is configured to:

determine a multi-phase line connection of the chargers (104a~104n), wherein the multi-phase line connection comprises a combination of at least two of the phase lines (L1~L3);
calculate a proposed charging current for the chargers (104a~104n) based on a minimum available current among the at least two of the phase lines (L1~L3);
adjust the modulated charging profile (MCP) to limit the charging current (Ic) to the minimum available current across the at least two of the phase lines (L1~L3); and
submit the modulated charging profile (MCP) to the chargers (104a~104n) to regulate the charging current (Ic).

**11.** The charger management device (130) as claimed in claim 1, wherein the processor (132) is configured to:

retrieve historical charging measurement from a charger database;
determine a charging status of each of the chargers (104a~104n);
exclude fully charged chargers from a current redistribution process; and
reallocate an unused current (Iu) to charging chargers based on the modulated charging profile (MCP) of each of the chargers (104a~104n).

**12.** The charger management device (130) as claimed in claim 1, wherein the processor (132) is configured to:

stop charging in response to the main current (Im) meeting a maximum rated capacity of the main breaker (MB) or an available power capacity being zero; or
maintain the modulated charging profile (MCP) of each of the chargers (104a~104n) in response to the available power capacity being unchanged from a previous iteration.

**13.** The charger management device (130) as claimed in claim 1, wherein the processor (132) is configured to assign and adjust a charging limitation for each of the chargers (104a~104n) based on a difference from a previously submitted limitation.

**14.** The charger management device (130) as claimed in claim 13, wherein the processor (132) is configured to:

compare a difference between the charging limitation and the previously submitted limitation with a current adjustment threshold;
increment the charging limitation by a first predefined current value in response to the difference exceeding the current adjustment threshold;
set the charging limitation to a second predefined current value in response to the charging limitation falling below the second predefined current value;
transmit the charging limitation to the chargers (104a~104n);
suspend further adjustment of the charging limitation for a waiting period; and
perform a subsequent comparison and adjustment of the charging limitation after the waiting period has elapsed, wherein the current adjustment threshold defines a minimum allowable change in charging current (Ic) required to trigger an update to the charging limitation.

**15.** A method for charger management, comprising:

obtaining main current measurement (MC) associated with a main breaker (MB) and import current measurement (Ica~Icn) associated with a plurality of chargers (104a~104n);
generating a default charging profile (DCP) based on a maximum charging capacity of the chargers (104a~104n)

until the main current measurement (MC) exceeds an upper threshold, wherein the default charging profile (DCP) defines a charging current (Ic) to be imported by the chargers (104a~104n);

calculating an available current (Ic_av) associated with the chargers (104a~104n) based on the upper threshold of a main current (Im) flowing through the main breaker (MB);

generating a modulated charging profile (MCP) based on the available current (Ic_av) in response to the main current measurement (MC) exceeding the upper threshold; and

submitting the modulated charging profile (MCP) to the chargers (104a~104n) to suppress the main current (Im).

100
MB
MS
Im
112
DPM
MC
114
Ic
Ib
120
Buildings
130
132
Processor
134
Memory
MC
MCP
140
140a
Ica
EVSE
150a
140b
Icb
EVSE
150b
140n
Icn
EVSE
150n

FIG. 1

Generate a default charging profile based on maximum rated capacity of each charger
202
Obtain main current measurement and compare against the DLM trigger threshold
204
Calculate an available current and generate a modulated charging profile
206
Limit a change in a charging current using a predefined increment and a minimum threshold
208
Submit the modulated charging profile to each charger and record acknowledgment
210

FIG. 2

Set an available current from the previous iteration to the present import current
302
Determine a minimum import current
304
Calculate an unused current by subtracting the site import current from the DLM trigger threshold
306
Add the unused current to the minimum import current to obtain the available current
308
Store the available current to update the modulated charging profile
310

FIG. 3

Detect an update delay time in import current measurement
402
Transmit the modulated charging profile intermittently during the freeze state
404
Record an acknowledgment from EV chargers that indicates the charging profile is received
406
Calculate a leftover time based on a freeze duration and a DLM processing time
408
Submit a subsequent current profile after the leftover time has elapsed or the acknowledgment is received
410

FIG. 4

Identify phase connection type of each EVSE
502
Measure the available current for each phase line
504
Determine the minimum available current across the connected phase lines
506
Adjust the modulated charging profile based on the minimum available current
508
Submit phase-specific charging profile to each EVSE
510

FIG. 5

Retrieve charging status and historical measurement from EVSE database
602
Exclude fully charged EVSEs from the redistribution process
604
Calculate an unused current from the excluded EVSEs
606
Reallocate the unused current to active EVSEs based on the charging profiles
608
Submit an updated modulated charging profiles to the active EVSEs
610

FIG. 6

Monitor the import current for gradient changes
702
Compare the gradient changes against a predefined threshold
704
Trigger modulation logic upon event detections
706
Update historical measurement and EVSE status flags
708

FIG. 7

Detect invalid or missing measurement from the DPM
802
Estimate the charging current using fallback logic
804
Adjust an available current calculation using the estimated charging current
806
Resume normal operations when valid DPM measurement is restored
808

FIG. 8

Monitor timestamps of EVSE and DPM measurement
902
Compare delay times of the EVSE and DPM measurement against predefined thresholds
904
Suspend charging profile updates during delay periods
906
Resume updates upon measurement validation
908

FIG. 9

Retrieve proposed and previous charging limitations
1002
Compare the values of the proposed and previous charging limitations
1004
Enforce a minimum charging threshold
1006
Apply a waiting period before next adjustment
1008
Submit an updated charging limitation to EVSEs
1010

FIG. 10

Current (A)
Imax
Itrg
Ire
t_ac
t_ac
1102
1104
1106
Time (s)
1
2
3
4
5
6
7
8
9
10
11
12
13
14
15
16
17
18
19
20

FIG. 11

Europäisches Patentamt
European Patent Office
Office européen des brevets

# EUROPEAN SEARCH REPORT

Application Number
EP 25 22 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 733 199 A (KAWAMURA ELECTRIC INC) 3 March 2023 (2023-03-03) * paragraphs [0021], [0035], [0045], [0041], [0043], [0038], [0064], [0044] - paragraphs [0057] - [0059], [0063] - [0064], [0053], [0062], [0105] - [0108]; figure 1 * ----- | 1-15 | INV. H02J7/92 |
| X | EP 4 501 697 A1 (COMPUTIME LTD [HK]) 5 February 2025 (2025-02-05) * paragraphs [0028], [0045] - [0047]; figures 1,7 * ----- | 1,15 | |

TECHNICAL FIELDS SEARCHED (IPC)

H02J

The present search report has been drawn up for all claims

| Place of search | Date of completion of the search | Examiner |
|---|---|---|
| Munich | 10 May 2026 | Pavlosyuk, Mikhail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 25 22 5063

This annex lists the patent family members relating to the patent documents cited in the above-mentioned European search report. The members are as contained in the European Patent Office EDP file on
The European Patent Office is in no way liable for these particulars which are merely given for the purpose of information.

10-05-2026

| Patent document cited in search report | Publication date | Patent family member(s) | Publication date |
|---|---|---|---|
| CN 115733199 A | 03-03-2023 | CN 115733199 A | 03-03-2023 |
| | | JP 7745386 B2 | 29-09-2025 |
| | | JP 2023034166 A | 13-03-2023 |
| EP 4501697 A1 | 05-02-2025 | CN 119189777 A | 27-12-2024 |
| | | EP 4501697 A1 | 05-02-2025 |
| | | US 2025042293 A1 | 06-02-2025 |

EPO FORM P0459

For more details about this annex : see Official Journal of the European Patent Office, No. 12/82